# EUROPÄISCHE PATENTSCHRIFT

(11) **EP 3 526 300 B1**
(45) Veröffentlichungstag und Bekanntmachung des Hinweises auf die Patenterteilung: **01.09.2021**
(21) Anmeldenummer: 17790991.8
(22) Anmeldetag: 12.10.2017
(51) Int. Cl.: C09J 123/14, C08F 210/06, C08F 4/659

(54) **HAFTKLEBSTOFFE**
CONTACT ADHESIVES
AUTO-ADHÉSIFS

(30) Priorität: 17.10.2016 DE 102016220263
(43) Veröffentlichungstag der Anmeldung: 21.08.2019
(73) Patentinhaber: Clariant International Ltd, 4132 Muttenz (CH)
(72) Erfinder: STEIB, Christian, 86356 Steppach / Neusaess (DE); HAUCK, Erik, 66953 Pirmasens (DE); HOHNER, Gerd, 86152 Augsburg (DE); LANG, Andreas, 82256 Fuerstenfeldbruck (DE); BROEHMER, Manuel, 82140 Olching (DE)
(74) Vertreter: Kuba, Stefan
(86) Internationale Anmeldenummer: PCT/EP2017/076015
(87) Internationale Veröffentlichungsnummer: WO 2018/073088

(56) Entgegenhaltungen:
- EP-A1- 1 788 056
- EP-B1- 1 353 997
- WO-A1-2014/154328
- DE-A1-102007 060 533

## Beschreibung

Die Erfindung betrifft Haftklebstoffe enthaltend Poly-1-Olefine, die mit Metallocenkatalysatoren hergestellt wurden, zur Verbindung von Fügeteilen.

Haftklebstoffe (Pressure Sensitive Adhesives, PSA) bilden zwischen den zu verklebenden Fügeteilen viskoelastische Filme aus. Der auf rein physikalischen Prinzipien beruhende Klebeverbund wird durch Ausübung von leichtem Druck auf die mit dem Klebstoff benetzten Oberflächen der Fügeteile erreicht. Die Verklebung ist in der Regel reversibel und kann ohne Zerstörung der Substrate wieder gelöst werden.

Als Basispolymere für Haftklebstoffe sind eine Vielzahl an Klebstoffgrundstoffen wie Natur- oder Synthesekautschuke, Polyacrylate, Styrol-Butadien- oder Styrol-Isobuten-Blockcopolymere, Polyisobutylene, Polyester, Polychloroprene, Polyvinylether oder Polyurethane in Gebrauch. Diese werden in Kombination mit Harzen, Weichmachern und anderen Zusätzen als Haftkleber eingesetzt. In der Regel enthalten Haftschmelzkleber auch Mineralöle, zum Teil in bedeutender Menge.

Die Kohäsion des Haftklebstoffsystems wird in der Regel vom Basispolymer bestimmt, für die adhäsive Wirkung sind in erster Linie die Harz- und Weichmacher-Komponenten verantwortlich.

Für die Applikation der Haftklebstoffe auf den Trägermaterialien sind unterschiedliche Verfahren möglich, so etwa die Auftragung aus der Schmelze, aus wässrigen Dispersionen oder aus der Lösung unter Einsatz von organischen Lösemitteln.

Haftklebstoffe haben ein breites Anwendungsspektrum. Sie werden überall dort eingesetzt, wo eine reversible Verklebung erwünscht ist und wo keine hohen Anforderungen an die Festigkeit gestellt werden, beispielsweise zur Herstellung von Klebe- oder Isolierbändern, für Selbstklebefolien oder -etiketten oder Heftpflaster, darüber hinaus auch zum Verkleben schwieriger Substrate, welche entweder nicht oder nur bedingt oder nach Vorbehandlung, beispielsweise Koronavorbehandlung, verklebt werden können.

Die Patentschrift EP 1353997B1 beschreibt druckempfindliche Klebstoffmischungen bestehend aus amorphen Ethylen-Propylen-Copolymeren, einem "nicht stereoregulären" Polypropylen sowie gegebenenfalls einem Klebrigmacher. Bevorzugt handelt es sich bei dem amorphen Ethylen-Propylen-Copolymeren um nicht mit Metallocenkatalysatoren hergestellte Produkte mit Glasübergangstemperaturen zwischen -33 und -23 °C. Die "nicht stereoregulären" Polypropylene weisen Schmelzviskositäten bei 190 °C von mehr als 50 000 mPa.s und Glasübergangstemperaturen zwischen -15 und +10 °C auf. Vorzugsweise handelt sich dabei um Polypropylen-Homopolymere, die mit Metallocenkatalysatoren hergestellt wurden.

In der Anmeldeschrift US 2004/0127614A1 werden Haftkleberformulierungen beschrieben, die mit Metallocenkatalysatoren hergestellte Propylenpolymere sowie, neben einer Harzkomponente, zusätzlich Mineralöle enthalten. Letztere werden wegen ihres Potentials zur Anreicherung in menschlichem Gewebe inzwischen als toxikologisch riskant bewertet, weswegen Haftkleber, soweit sie z. B. für Lebensmittelverpackungen eingesetzt werden, wünschenswerterweise frei von solchen Zusätzen ("Mineral Oil Saturated Hydrocarbons", "MOSH") sein sollten.

Es besteht über den Stand der Technik hinaus Bedarf nach wirksamen Haftschmelzklebern, die insbesondere ohne Zusatz von Mineralölprodukten formuliert werden können.

Überraschend wurde gefunden, dass sich bestimmte mit Metallocenkatalysatoren hergestellte Polyolefine in besonderer Weise für die Herstellung von Haftklebstoffen eignen, wobei Mineralölzusätze nicht erforderlich sind.

Es ist bekannt, dass sich Produkte aus der Olefinpolymerisation mittels Metallocenen in ihrer Mikrostruktur vielfältig von Polyolefinen unterscheiden, die nach anderen Insertionsmechanismen, beispielsweise mithilfe von Ziegler-Natta-Katalysatoren, synthetisiert wurden. Dies betrifft z. B. die Verteilung der Monomeren in der Polymerkette sowie die Molmassenverteilungen. Derartige spezifische Abweichungen lassen jedoch in der Regel keine Schlüsse auf eventuelle Unterschiede hinsichtlich der anwendungstechnischen Eigenschaften zu.

Niedrigmolekulare amorphe, mithilfe von Metallocenen synthetisierte Copolymere aus 1-Olefinen und Ethylen sind bekannt. So werden in den Patentschriften EP 200351 B2 und EP 586777B1 statistische Copolymere aus Ethylen und höheren 1-Olefinen C₃-C₂₀ beschrieben. Als Polymerisationskatalysatoren werden nicht verbrückte bzw. verbrückte Metallocene vom Bis-cyclopentadienyl-Typ eingesetzt. Die Copolymeren eignen sich für den Einsatz in Schmierölen.

Die Anmeldeschrift WO 2004031250 beschreibt homogene niedrigmolekulare flüssige bzw. gelartige Ethylen/α-Olefin-Copolymere ebenfalls als Komponente in Schmierölformulierungen. Die Copolymeren werden mittels Metallocenkatalysatoren des Mono-cyclopentadienyl-Typs hergestellt.

Weitere mit Metallocenen synthetisierte, amorphe und für den Schmierölsektor geeignete Poly-α-olefine, insbesondere Poly-1-decene, werden in dem Dokument US 6,858,767B1 beschrieben.

Wachsartige mittels Metallocenkatalyse hergestellte Copolymere aus Propylen und Ethylen mit teilkristallinem Charakter sind aus EP 0384264A1 bekannt.

Gegenstand der vorliegenden Erfindung sind Haftklebemassen, enthaltend zwischen 5 und 50 Gew.-% Copolymere des Propylens mit Ethylen und/oder mit Olefinen, ausgewählt aus der Gruppe der höheren 1-Olefine C₄-C₂₀, wobei die Copolymeren mithilfe von Metallocenkatalysatoren hergestellt wurden und gekennzeichnet sind durch
- einen Fließpunkt von < 50 °C, bevorzugt < 30 °C, besonders bevorzugt < 25 °C,
- eine Viskosität bei 170 °C zwischen 20 und 3000 mPa.s, bevorzugt 50 bis 1000 mPa.s, besonders bevorzugt 80 bis 500 mPa.s,
- eine Dichte bei 23 °C zwischen 0,83 und 0,90, bevorzugt 0,84 und 0,88 g/cm³,
- eine nach der DSC-Methode bestimmten Glasübergangstemperatur von < -35 °C, bevorzugt < -40 °C, besonders bevorzugt < -45 °C.

Der Fließpunkt wird gemäß ASTM D97, die Viskosität mit einem Rotationsviskosimeter der Bauart "Kegel/Platte" nach DIN 53019, die Dichte nach ISO 1183, die Glasübergangstemperatur mittels DSC gemäß DIN EN ISO 11357-2:2014 bestimmt.

Als höhere 1 -Olefine dienen lineare oder verzweigte Olefine mit 4 bis 20 C-Atomen und vorzugsweise mit 4 bis 6 C-Atomen. Diese Olefine können eine mit der olefinischen Doppelbindung in Konjugation stehende aromatische Substitution aufweisen. Beispiele sind 1-Buten, 1-Hexen, 1-Octen oder 1-Octadecen sowie Styrol.

Die Copolymeren enthalten zwischen 70 und 95 Gew.-%, bevorzugt 75 bis 85 Gew.-% Einheiten aus Propylen. Der Anteil des oder der Comonomeren liegt demnach bei 5 bis 30 Gew.-%, bevorzugt 15 bis 25 Gew.-%.

Bevorzugt sind die Copolymeren des Propylens mit Ethylen.

Zur Herstellung der Copolymeren werden metallorganische Katalysatoren vom Typ der Metallocenverbindungen eingesetzt. Diese enthalten Titan-, Zirkonium- oder Hafniumatome als aktive Spezies und werden in der Regel in Kombination mit Cokatalysatoren, z. B. Organoaluminium- oder Borverbindungen, bevorzugt Aluminoxanverbingungen, eingesetzt. Die Polymerisation erfolgt bei Bedarf in Gegenwart von Wasserstoff als Molmassenregler. Metallocenverfahren zeichnen sich dadurch aus, dass im Vergleich zur älteren Zieglertechnologie Polymere mit engerer Molmassenverteilung, gleichmäßigerem Comonomereinbau und höherer Katalysatoreffektivität erhalten werden können.

Für die Herstellung der erfindungsgemäß verwendeten Metallocene-Polyolefine werden Metallocenverbindungen der Formel (I) eingesetzt.

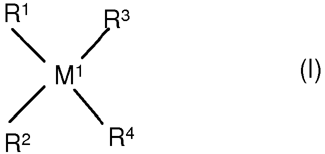

Diese Formel umfasst auch Verbindungen der Formel (la), 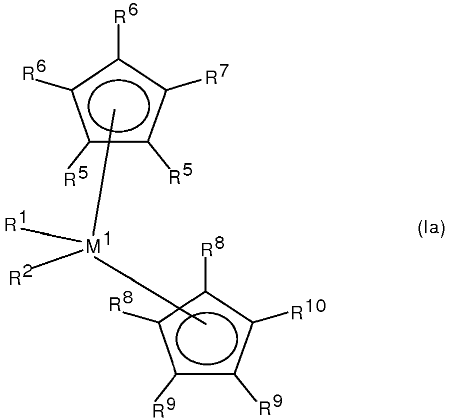 der Formel (Ib), 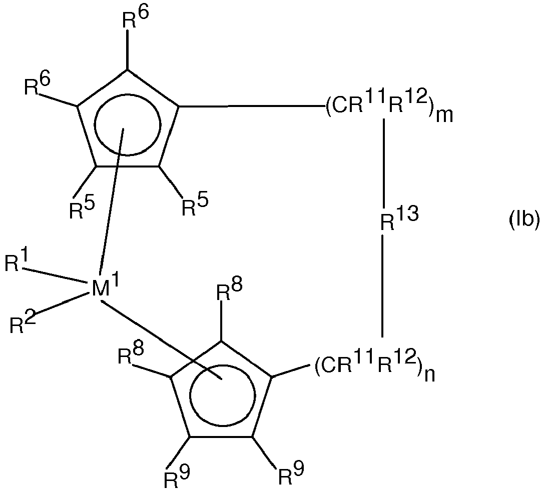 und der Formel (Ic)

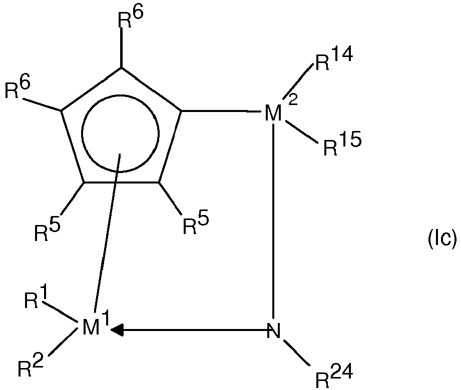

In den Formeln (I), (la) und (Ib) ist M¹ ein Metall der Gruppe IVb, Vb oder VIb des Periodensystems, beispielsweise Titan, Zirkonium, Hafnium, Vanadium, Niob, Tantal, Chrom, Molybdän, Wolfram, vorzugsweise Titan, Zirkonium und Hafnium.

R¹ und R² sind gleich oder verschieden und bedeuten ein Wasserstoffatom, eine C₁-C₁₀-, vorzugsweise C₁-C₃-Alkylgruppe, insbesondere Methyl, eine C₁-C₁₀-, vorzugsweise C₁-C₃-Alkoxygruppe, eine C₆-C₁₀-, vorzugsweise C₆-C₈-Arylgruppe, eine C₆-C₁₀-, vorzugsweise C₆-C₈-Aryloxygruppe, eine C₂-C₁₀-, vorzugsweise C₂-C₄-Alkenylgruppe, eine C₇-C₄₀-, vorzugsweise C₇-C₁₀-Arylalkylgruppe, eine C₇-C₄₀-, vorzugsweise C₇-C₁₂-Alkylarylgruppe, eine C₈-C₄₀-, vorzugsweise C₈-C₁₂-Arylalkenylgruppe oder ein Halogen-, vorzugsweise Chloratom.

R³ und R⁴ sind gleich oder verschieden und bedeuten einen ein- oder mehrkernigen Kohlenwasserstoffrest, welcher mit dem Zentralatom M¹ eine Sandwichstruktur bilden kann. Bevorzugt sind R³ und R⁴ Cyclopentadienyl, Indenyl, Tetrahydroindenyl, Benzoindenyl oder Fluorenyl, wobei die Grundkörper noch zusätzliche Substituenten tragen oder miteinander verbrückt sein können. Außerdem kann einer der Reste R³ und R⁴ ein substituiertes Stickstoffatom sein, wobei R²⁴ die Bedeutung von R¹⁷ hat und vorzugsweise Methyl, tert.-Butyl oder Cyclohexyl ist.

R⁵, R⁶, R⁷, R⁸, R⁹ und R¹⁰ sind gleich oder verschieden und bedeuten ein Wasserstoffatom, ein Halogenatom, vorzugsweise ein Fluor-, Chlor- oder Bromatom, eine C₁-C₁₀-, vorzugsweise C₁-C₄-Alkylgruppe, eine C₆-C₁₀-, vorzugsweise C₆-C₈-Arylgruppe, eine C₁-C₁₀-, vorzugsweise C₁-C₃-Alkoxygruppe, einen -NR¹⁶₂-, -SR¹⁶-, -OSiR¹⁶₃-, -SiR¹⁶₃- oder -PR¹⁶₂-Rest, worin R¹⁶ eine C₁-C₁₀-, vorzugsweise C₁-C₃-Alkylgruppe oder C₆-C₁₀-, vorzugsweise C₆-C₈-Arylgruppe oder im Falle Si oder P enthaltender Reste auch ein Halogenatom, vorzugsweise Chloratom ist oder je zwei benachbarte Reste R⁵, R⁶, R⁷, R⁸, R⁹ oder R¹⁰ bilden mit den sie verbindenden C-Atomen einen Ring. Besonders bevorzugte Liganden sind die substituierten Verbindungen der Grundkörper Cyclopentadienyl, Indenyl, Tetrahydroindenyl, Benzoindenyl oder Fluorenyl.
R¹³ ist 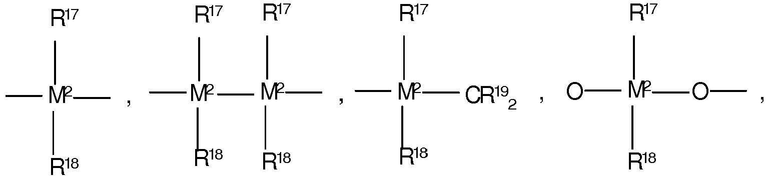 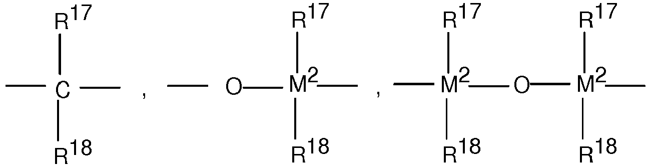 =BR¹⁷, =AIR¹⁷ , -Ge-, -Sn-, -O-, -S-, =SO, =SO₂, =NR¹⁷, =CO, =PR¹⁷ oder =P(O)R¹⁷, wobei R¹⁷, R¹⁸ und R¹⁹ gleich oder verschieden sind und ein Wasserstoffatom, ein Halogenatom, vorzugsweise ein Fluor-, Chlor- oder Bromatom, eine C₁-C₃₀-, vorzugsweise C₁-C₄-Alkyl-, insbesondere Methylgruppe, eine C₁-C₁₀-Fluoralkyl-, vorzugsweise CF₃-Gruppe, eine C₆-C₁₀-Fluoraryl-, vorzugsweise Pentafluorphenylgruppe, eine C₆-C₁₀-, vorzugsweise C₆-C₈-Arylgruppe, eine C₁-C₁₀-, vorzugsweise C₁-C₄-Alkoxy-, insbesondere Methoxygruppe, eine C₂-C₁₀-, vorzugsweise C2-C4-Alkenylgruppe, eine C₇-C₄₀-, vorzugsweise C₇-C₁₀-Aralkylgruppe, eine C₈-C₄₀-, vorzugsweise C₈-C₁₂-Arylalkenylgruppe oder eine C₇-C₄₀-, vorzugsweise C₇-C₁₂-Alkylarylgruppe bedeuten, oder R¹⁷ und R¹⁸ oder R¹⁷ und R¹⁹ bilden jeweils zusammen mit den sie verbindenden Atomen einen Ring.

M² ist Silizium, Germanium oder Zinn, bevorzugt Silizium und Germanium. R¹³ ist vorzugsweise =CR¹⁷R¹⁸, =SiR¹⁷R¹⁸, =GeR¹⁷R¹⁸, -O-, -S-, =SO, =PR¹⁷ oder =P(O)R¹⁷.

R¹¹ und R¹² sind gleich oder verschieden und haben die für R¹⁷ genannte Bedeutung. m und n sind gleich oder verschieden und bedeuten null, 1 oder 2, bevorzugt null oder 1, wobei m plus n null, 1 oder 2, bevorzugt null oder 1 ist.

R¹⁴ und R¹⁵ haben die Bedeutung von R¹⁷ und R¹⁸.

Bevorzugt sind Metallocene des Typs Ia und Ib, besonders bevorzugt die des Typs Ib, speziell bevorzugt Ib-Metallocene mit symmetrischem Aufbau, d. h. gleichen aromatischen Liganden.

Beispiele für geeignete Metallocene sind:
Bis(1,2,3-trimethylcyclopentadienyl)zirkoniumdichlorid,
Bis(1,2,4-trimethylcyclopentadienyl)zirkoniumdichlorid,
Bis(1,2-dimethylcyclopentadienyl)zirkoniumdichlorid,
Bis(1,3-dimethylcyclopentadienyl)zirkoniumdichlorid,
Bis(1-methylindenyl)zirkoniumdichlorid,
Bis(1-n-butyl-3-methyl-cyclopentadienyl)zirkoniumdichlorid,
Bis(2-methyl-4,6-di-isopropyl-indenyl)zirkoniumdichlorid,
Bis(2-methylindenyl)zirkoniumdichlorid,
Bis(4-methylindenyl)zirkoniumdichlorid,
Bis(5-methylindenyl)zirkoniumdichlorid,
Bis(alkylcyclopentadienyl)zirkoniumdichlorid,
Bis(alkylindenyl)zirkoniumdichlorid,
Bis(cyclopentadienyl)zirkoniumdichlorid,
Bis(indenyl)zirkoniumdichlorid,
Bis(methylcyclopentadienyl)zirkoniumdichlorid,
Bis(n-butylcyclopentadienyl)zirkoniumdichlorid,
Bis(octadecylcyclopentadienyl)zirkoniumdichlorid,
Bis(pentamethylcyclopentadienyl)zirkoniumdichlorid,
Bis(trimethylsilylcyclopentadienyl)zirkoniumdichlorid,
Biscyclopentadienylzirkoniumdibenzyl,
Biscyclopentadienylzirkoniumdimethyl,
Bistetrahydroindenylzirkoniumdichlorid,
Dimethylsilyl-9-fluorenylcyclopentadienylzirkoniumdichlorid,
Dimethylsilyl-bis-1-(2,3,5-trimethylcyclopentadienyl)zirkoniumdichlorid,
Dimethylsilyl-bis-1-(2,4-dimethyl-cyclopentadienyl)zirkoniumdichlorid,
Dimethylsilyl-bis-1-(2-methyl-4,5-benzoindenyl)zirkoniumdichlorid,
Dimethylsilyl-bis-1-(2-methyl-4-ethylindenyl)zirkoniumdichlorid,
Dimethylsilyl-bis-1-(2-methyl-4-i-propylindenyl)zirkoniumdichlorid,
Dimethylsilyl-bis-1-(2-methyl-4-phenylindenyl)zirkoniumdichlorid,
Dimethylsilyl-bis-1-(2-methyl-indenyl)zirkoniumdichlorid,
Dimethylsilyl-bis-1-(2-methyltetrahydroindenyl)zirkoniumdichlorid,
Dimethylsilyl-bis-1-indenylzirkoniumdichlorid,
Dimethylsilyl-bis-1-indenylzirkoniumdimethyl,
Dimethylsilyl-bis-1-tetrahydroindenylzirkoniumdichlorid,
Diphenylmethylen-9-fluorenylcyclopentadienylzirkoniumdichlorid,
Diphenylsilyl-bis-1-indenylzirkoniumdichlorid,
Ethylen-bis-1-(2-methyl-4,5-benzoindenyl)zirkoniumdichlorid,
Ethylen-bis-1-(2-methyl-4-phenylindenyl)zirkoniumdichlorid,
Ethylen-bis-1-(2-methyl-tetrahydroindenyl)zirkoniumdichlorid,
Ethylen-bis-1-(4,7-dimethyl-indenyl)zirkoniumdichlorid,
Ethylen-bis-1-indenylzirkoniumdichlorid,
Ethylen-bis-1-tetrahydroindenylzirkoniumdichlorid,
Indenyl-cyclopentadienyl-zirkoniumdichlorid
lsopropyliden(1-indenyl)(cyclopentadienyl)zirkoniumdichlorid,
Isopropyliden(9-fluorenyl)(cyclopentadienyl)zirkoniumdichlorid,
Phenylmethylsilyl-bis-1-(2-methyl-indenyl)zirkoniumdichlorid,
sowie jeweils die Alkyl- oder Aryl-Derivate dieser Metallocendichloride.

Zur Aktivierung der Einzentren-Katalysatorsysteme werden geeignete Cokatalysatoren eingesetzt. Geeignete Cokatalysatoren für Metallocene der Formel (I) sind aluminiumorganische Verbindungen, insbesondere Alumoxane oder auch aluminiumfreie Systeme wie R²⁰ₓNH₄₋ₓBR²¹₄, R²⁰ₓPH₄₋ₓBR²¹₄, R²⁰₃CBR²¹₄ oder BR²¹₃. In diesen Formeln bedeutet x eine Zahl von 1 bis 4, die Reste R²⁰ sind gleich oder verschieden, bevorzugt gleich, und bedeuten C₁-C₁₀-Alkyl oder C₆-C₁₈-Aryl oder zwei Reste R²⁰ bilden zusammen mit dem sie verbindenden Atom einen Ring, und die Reste R²¹ sind gleich oder verschieden, bevorzugt gleich, und stehen für C₆-C₁₈-Aryl, das durch Alkyl, Haloalkyl oder Fluor substituiert sein kann. Insbesondere steht R²⁰ für Ethyl, Propyl, Butyl oder Phenyl und R²¹ für Phenyl, Pentafluorphenyl, 3,5-Bistrifluormethylphenyl, Mesityl, Xylyl oder Tolyl.

Zusätzlich ist häufig eine dritte Komponente erforderlich, um einen Schutz vor polaren Katalysator-Giften sicherzustellen. Hierzu sind aluminiumorganische Verbindung wie z. B. Triethylaluminium, Tributylaluminium und andere sowie Mischungen aus diesen geeignet.

Je nach Verfahren können auch geträgerte Einzentren-Katalysatoren zur Verwendung kommen. Bevorzugt sind Katalysatorsysteme, bei welchen die Restgehalte von Trägermaterial und Cokatalysator eine Konzentration von 100 ppm im Produkt nicht überschreiten.

Die Poly-1-Olefine können abhängig von ihren Eigenschaften in der Haftkleberformulierung sowohl die Funktion eines Basispolymeren als auch die eines Weich- oder oder Klebrigmachers ausüben.

Die Poly-1-Olefine sind in den als Haftklebstoff verwendeten Formulierungen mit einem Gewichtsanteil zwischen 5 und 50 %, bevorzugt zwischen 10 und 40 %, besonders bevorzugt zwischen 20 und 35 % enthalten.

Die Haftklebstoffe enthalten neben den erfindungsgemäßen mit Metallocenkatalysatoren hergestellten Poly-1-Olefin-Copolymeren zusätzliche Komponenten. In Frage kommen
- weitere Polyolefine: Darunter werden Polyolefine außerhalb der erfindungsgemäßen 1-Olefin-Copolymeren verstanden. Die weiteren Polyolefine werden durch Polymerisation von beliebigen unpolaren oder polaren, unverzweigten oder verzweigten Olefinen oder Kombinationen aus diesen erhalten. Beispielhaft genannt seien nach kationischen, anionischen oder Insertionsmechanismen hergestellte Polyolefine oder nach radikalischen Hochdruckverfahren synthetisierte polare oder unpolare Polyolefine aus polaren und/oder unpolaren Monomeren. Bevorzugt sind unpolare unter Verwendung von Ziegler-Natta- oder Metallocenkatalysatoren hergestellte Polyolefine. Insbesonders geeignet sind niedermolekulare teilkristalline Homo- oder Copolymere, wie sie sich beispielsweise unter dem Namen Licocene® des Herstellers Clariant im Handel befinden. Weiterhin bevorzugt sind Copolymere des Ethylens mit Propylen oder auch höheren α-Olefinen wie Buten-1 oder Octen-1, bekannt etwa unter Handelsnamen wie z. B. Versify®, Infuse®, Affinity® oder Engage® (Dow Chemical Comp.) bzw. Vistamaxx® oder Exxact® (Exxon Mobil Chemical). Außerdem bevorzugt sind Blockcopolymere aus Styrol und Dienen wie Isopren oder Butadien, gegebenenfalls mit Anteilen von Ethylen (SIS, SBS, SEBS). Weiterhin bevorzugt sind sogenannte amorphe Poly-alpha-Olefine (APAO), ataktisches Polypropylen (APP) oder Polyisobuten (PIB).
- Harze: Als solche stehen z. B. übliche sog. aliphatische und cycloaliphatische oder aromatische Kohlenwasserstoffharze zur Verfügung. Diese können durch Polymerisation bestimmter Harzölfraktionen hergestellt werden, die bei der Aufbereitung von Erdöl anfallen. Derartige Harze, die z. B. durch Hydrierung oder Funktionalisierung modifiziert werden können, sind beispielsweise unter den Handelsnamen Eastoflex®, RegalREZ®, Kristalex®, Eastotac®, Piccotac® (Eastman Chemical Company) oder Escorez® (ExxonMobil Chemical Company) erhältlich.

Weiter kommen als Harze Polyterpen-Harze in Betracht, hergestellt durch Polymerisation von Terpenen, beispielsweise Pinen in Gegenwart von Friedel-Crafts- Katalysatoren, desgleichen hydrierte Polyterpene, Copolymere und Terpolymere von natürlichen Terpenen, beispielsweise Styrol/Terpen- oder α-Methylstyrol/Terpen-Copolymere. Weiter in Betracht kommen natürliche und modifizierte Kolophoniumharze, insbesondere Harzester, Glycerinester von Baumharzen, Pentaerithrolester von Baumharzen und Tallölharzen und deren hydrierte Derivate, sowie phenol-modifizierte Pentaerithrolester von Harzen und phenol-modifizierte Terpenharze;
- Natur- oder Synthesekautschuke, Polyacrylate, Polyester, Polychloroprene, Polyvinylether oder Polyurethane;
- Weitere Komponenten wie Weichmacher, unpolare Wachse wie Polyethylen- oder Polypropylenwachse oder Paraffinwachse wie Fischer-Tropsch-Paraffine, mikro- oder makrokristalline Paraffine, polare Wachse wie z. B. oxidierte oder mit polaren Olefinen gepfropfte Polyolefinwachse oder Ethylen-Vinylacetat-Copolymerwachse oder Ethylen-Acrylsäure-Copolymerwachse, weiterhin organische oder anorganische Pigmente, Füllstoffe und Stabilisatoren, z. B. Antioxidantien und Lichtschutzmittel.

Die nachfolgenden Beispiele sollen die Erfindung näher erläutern, ohne diese jedoch einzuschränken.

### Beispiel 1:

Herstellung eines erfindungsgemäßen Propylen-Ethylen-Copolymeren (in Anlehnung an EP 0384264A1, Beispiele 1 - 16).

Ein trockener 16 dm³-Kessel wurde mit Stickstoff gespült und mit 50 Ndm³ (entsprechend 3,1 bar) Wasserstoff sowie mit 10 dm³ flüssigem Propylen befüllt. Dann wurden 30 cm³ toluolische Methylaluminoxanlösung (entsprechend 40 mmol Al, mittlerer Oligomerisierungsgrad des Methylaluminoxans n=20) sowie 100 g Ethylen zugegeben und der Ansatz bei 30 °C 15 Minuten gerührt.

Parallel dazu wurden 8,0 mg des Metallocens Dimethylsilyl-bis-1-indenylzirkoniumdichlorid in 15 cm³ toluolischer Methylaluminoxanlösung (20 mmol Al) gelöst und durch 15 minütiges Stehenlassen voraktiviert. Die orangerote Lösung wurde in den Kessel gegeben. Das Polymerisationssystem wurde auf 80 °C gebracht und durch entsprechende Kühlung während der Polymerisationszeit (60 min) bei dieser Temperatur gehalten. Während der Polymerisationszeit wurden gleichmäßig weitere 330 g Ethylen zudosiert.

Das erhaltene Propylen-Ethylen-Copolymer (Ausbeute 1,95 kg) wies einen Propylengehalt von 79,5 Gew.-% auf. Die Bestimmung erfolgte ¹³C-NMR-spektroskopisch nach Ser van der Ven, Polypropylene and other Polyolefins, Kap. 13, S. 568f, Amsterdam, Oxford, New York, Tokyo 1990. Das Copolymer zeigte folgende Kennzahlen:

| | |
|---|---|
| Viskosität bei 170 °C: | 210 mPa.s; |
| Dichte bei 23 °C: | 0,85 g/cm3; |
| Fließpunkt: | 21 °C |
| Glasübergangstemperatur: | - 48 °C. |

### Anwendungstechnische Prüfungen

Es wurden Mischungen gemäß den Tabellen 1 und 2 hergestellt. Hierzu wurden die angegebenen Komponenten in den genannten Gewichtsanteilen in geschmolzenem Zustand bei ca. 170 °C homogen miteinander verrührt. Die schmelzflüssige Masse (ca. 150 g) wurde in zwei etwa gleichen Portionen auf silikonbeschichtetes Papier verteilt. Eine Portion wurde in den Schmelztank einer Walzenauftragsmaschine vom Typ Thermo 150 (Hersteller Hardo Maschinenbau GmbH) gefüllt und nach 5 min wieder abgelassen (Vorspülung des Geräts). Die zweite Portion diente zur Beschichtung einer Glasplatte (5 x 20 cm). Das Auftragsgewicht wurde durch Auswiegen bestimmt. Die Glasplatte wurde mit der beschichteten Seite nach unten ca. 1 Woche bei Raumtemperatur auf einem Silikonpapier gelagert. Sodann wurde die beschichtete Seite mit einer Polyesterfolie verklebt und verpresst, indem eine Anpresswalze mit 5 kg Belastung 10-mal über die Verklebung gezogen bzw. geschoben wurde. Anschließend wurde der verklebte Probenkörper in eine Rollenschälvorrichtung (Hersteller Zwick Roell) eingespannt und der Schälwert nach DIN EN 1464, 06/2010 (Trockenschälversuch) ermittelt.

**Tabelle 1: Anwendungsbeispiele (erfindungsgemäß) / (Einsatzmengen in Gew.-%)**

| | AE 1 | AE 2 | AE 3 | AE 4 | AE 5 | AE 6 | AE 7 | AE 8 | AE 9 | AE10 | AE 11 | AE 12 |
|---|---|---|---|---|---|---|---|---|---|---|---|---|
| Propylen-Ethylen-Copolymer gemäß Bsp. 1 | 30 | 30 | 30 | 30 | 30 | 30 | 30 | 30 | 30 | 25 | 30 | 35 |
| Vestoplast® 828 | | | 15 | | | | | | | | | |
| Vestoplast® 888 | | | | 15 | | | | | | | | |
| Eastoflex® 1060 | | | | | 15 | | | | | | | |
| Versify® DE 4301.01 | | | | | | 15 | 15 | | 5 | | | |
| Licocene® PP 1602 | | | | | | | | 15 | | | | |
| Vistamaxx® 6102 | | | | | | | | | 10 | | | |
| Infuse® 9807 | 15 | | | | | | | | | | | |
| Infuse® 9817 | | 15 | | | | | | | | | | |
| Engage® 8407 | | | | | | | | | | 20 | 15 | 10 |
| Sukorez® SU 100 | 55 | 55 | 55 | 55 | 55 | 55 | | 55 | 55 | 55 | 55 | 55 |
| Dertophene® T | | | | | | | 55 | | | | | |
| Schmelzviskosität (150 °C) [mPa.s] | 3989 | 4265 | 1255 | 16570 | 610 | 14500 | 8200 | 937 | 43000 | 10500 | 3790 | 3200 |
| Schälwert sofort [N/mm] | 0,9 | 0,53 | 1,12 | 1,11 | 0,91 | 0,85 | 0,97 | 0,47 | 0,54 | 0,70 | 0,66 | 0,62 |

**Tabelle 2: Anwendungsbeispiele (nicht erfindungsgemäß) / (Einsatzmengen in Gew.-%)**

| | | AV 1 | AV 2 | AV 3 | AV 4 |
|---|---|---|---|---|---|
| Propylen-Ethylen-Copolymer gemäß Beispiel 1 | | - | - | 55 | 70 |
| Versify® DE 4301.01 | | 15 | | 15 | 15 |
| Engage® 8407 | | | 15 | | |
| Sukorez® SU 100 | | 55 | 55 | 30 | 15 |
| Regalite® 1010 | | 20 | 20 | | |
| Shell Catenex® T145 | | 10 | 10 | | |
| Schmelzviskosität (150 °C) | [mPa.s] | 4000 | 1500 | 7000 | 5000 |
| Schälwert sofort | [N/mm] | 0,20 | 0,34 | 0,21 | 0 |

Eingesetzte Rohstoffe:
Vestoplast® bzw. Eastoflex® sind amorphe Poly-α-Olefine (APAO) der Hersteller Evonik bzw. Eastman.
Versify®, Infuse® und Engage® bzw. Vistamaxx® sind Ethylen-Copolymere der Hersteller Dow bzw. ExxonMobile.
Licocene® PP 1602 ist ein Propylen-Ethylen-Copolymer des Herstellers Clariant.
Sukorez® SU 100 bzw. Regalite® 1010 sind hydrierte Kohlenwasserstoffharze der Hersteller Kolon Ind. bzw. Eastman, Dertophen T ist ein Terpen-Phenol-Harz des Herstellers DRT.
Catenex® T145 ist ein Paraffinöl des Herstellers Shell.

## Patentansprüche

1. Haftklebemassen enthaltend 5 bis 50 Gew.-% Copolymere des Propylens mit Ethylen und/oder mit Olefinen, ausgewählt aus der Gruppe der 1-Olefine mit 4 bis 20 C-Atomen, wobei die Copolymeren mithilfe von Metallocenkatalysatoren hergestellt wurden und **gekennzeichnet sind durch**
a) einen Fließpunkt, gemessen nach ASTM D97, von < 50 °C,
b) eine Viskosität bei 170 °C im Bereich von 20 bis 3000 mPa.s, gemessen mit einem Rotationsviskosimeter nach DIN 53019,
c) eine Dichte im Bereich von 0,84 bis 0,90 g/cm³, gemessen bei 23 °C nach ISO 1183,
d) einer Glasübergangstemperatur von < -35 °C, gemessen nach der DSC-Methode gemäß DIN EN ISO 11357-2:2014.

2. Haftklebemassen gemäß Anspruch 1, **dadurch gekennzeichnet, dass** die 1-Olefin-Copolymeren zu 70 - 95 Gew.-% aus der Struktureinheit Propylen und zu 5 - 30 Gew.-% aus Struktureinheiten ausgewählt aus Ethylen und/oder der Gruppe der 1-Olefine mit 4 bis 20 C-Atomen bestehen.

3. Haftklebemassen gemäß Anspruch 1, **dadurch gekennzeichnet, dass** die 1-Olefin-Copolymeren zu 70 - 95 Gew.-% aus der Struktureinheit Propylen und zu 5 - 30 Gew.-% aus der Struktureinheit Ethylen bestehen.

4. Haftklebemassen gemäß einem oder mehreren der Ansprüche 1 bis 3, enthaltend 50 - 95 Gew.-% einer oder mehrerer Komponenten ausgewählt aus der Gruppe der weiteren Polyolefine, der Harze, der Wachse, der Weichmacher, der Natur- oder Synthesekautschuke, Polyacrylate, Polyester, Polychloroprene, Polyvinylether oder Polyurethane, der Pigmente, der Füllstoffe, der Stabilisatoren und der Antioxidantien.

5. Verwendung von Haftklebemassen gemäß einer oder mehrerer der vorhergehenden Ansprüche zur Verbindung von Fügeteilen.

## Claims

1. Pressure-sensitive adhesive compositions containing 5% to 50% by weight of copolymers of propylene with ethylene and/or with olefins selected from the group of the 1-olefins having 4 to 20 carbon atoms, where the copolymers have been prepared with the aid of metallocene catalysts and are **characterized by**
a) a flow point, measured to ASTM D97, of < 50°C,
b) a viscosity at 170°C in the range from 20 to 3000 mPa.s, measured with a rotary viscometer to DIN 53019,
c) a density in the range from 0.84 to 0.90 g/cm³, measured at 23°C to ISO 1183,
d) a glass transition temperature of < -35°C, measured by the DSC method to DIN EN ISO 11357-2:2014.

2. Pressure-sensitive adhesive compositions according to Claim 1, **characterized in that** the 1-olefin copolymers consist to an extent of 70-95% by weight of the propylene structural unit and to an extent of 5-30% by weight of structural units selected from ethylene and/or the group of the 1-olefins having 4 to 20 carbon atoms.

3. Pressure-sensitive adhesive compositions according to Claim 1, **characterized in that** the 1-olefin copolymers consist to an extent of 70-95% by weight of the propylene structural unit and to an extent of 5-30% by weight of the ethylene structural unit.

4. Pressure-sensitive adhesive compositions according to one or more of Claims 1 to 3, containing 50-95% by weight of one or more components selected from the group of the further polyolefins, the resins, the waxes, the plasticizers, the natural or synthetic rubbers, polyacrylates, polyesters, polychloroprenes, polyvinyl ethers or polyurethanes, the pigments, the fillers, the stabilizers and the antioxidants.

5. Use of pressure-sensitive adhesive compositions according to one or more of the preceding claims for bonding of adherends.

## Revendications

1. Masses auto-adhésives contenant 5 à 50 % en poids de copolymères avec l'éthylène et/ou avec des oléfines, choisies dans le groupe des 1-oléfines ayant 4 à 20 atomes de carbone, les copolymères ayant été fabriqués à l'aide de catalyseurs à base de métallocènes et étant **caractérisés par**
a) un point d'écoulement, mesuré selon ASTM D97, < 50 °C,
b) une viscosité à 170 °C dans la plage de 20 à 3 000 mPa.s, mesurée à l'aide d'un viscosimètre rotatif selon DIN 53019,
c) une masse volumique dans la plage de 0,84 à 0,90 g/cm³, mesurée à 23 °C selon ISO 1183,
d) une température de transition vitreuse < -35 °C, mesurée par la méthode ACD selon DIN EN ISO 11357-2 : 2014.

2. Masses auto-adhésives selon la revendication 1, **caractérisées en ce que** les copolymères de 1-oléfines sont à raison de 70 à 95 % en poids constitués du motif structural propylène et à raison de 5 à 30 % en poids de motifs structuraux choisis parmi l'éthylène et/ou le groupe des 1-oléfines ayant 4 à 20 atomes de carbone.

3. Masses auto-adhésives selon la revendication 1, **caractérisées en ce que** les copolymères de 1-oléfines sont constitués à raison de 70 à 95 % en poids du motif structural propylène et à raison de 5 à 30 % en poids du motif structural éthylène.

4. Masses auto-adhésives selon l'une des revendications 1 à 3, contenant 50 à 95 % en poids d'un ou plusieurs composants choisis dans le groupe des autres polyoléfines, des résines, des cires, des plastifiants, des caoutchoucs naturels ou synthétiques, des polyacrylates, des polyesters, des polychloroprènes, des polyvinyléthers ou des polyuréthanes, des pigments, des charges, des stabilisants et des antioxydants.

5. Utilisation de masses auto-adhésives selon l'une ou plusieurs des revendications précédentes pour assembler des surfaces à coller.
